# EUROPEAN PATENT APPLICATION

(11) **EP 3 907 687 A1**
(43) Date of publication of application: **10.11.2021**
(21) Application number: 19906717.4
(22) Date of filing: 18.09.2019
(51) Int. Cl.: G06Q 30/06, G06Q 50/02

(54) **FARM RENTING SYSTEM AND RENT MANAGEMENT METHOD**

(30) Priority: 04.01.2019 CN 201910007603; 13.03.2019 CN 201910187491
(71) Applicant: FJ Dynamics Technology Academy (Chang Zhou) Co., Ltd., Changzhou, Jiangsu 213001 (CN)
(72) Inventor: YAO, Yuan, hangzhou, Jiangsu 213001 (CN); XIA, Tan, hangzhou, Jiangsu 213001 (CN); QI, Jiayuan, hangzhou, Jiangsu 213001 (CN)
(74) Representative: Zaboliene, Reda
(86) International application number: PCT/CN2019/106392
(87) International publication number: WO 2020/140479

(57) **Abstract**

A farm lease system and a lease management method that enables a user to lease a farmable area to grow a crop. The farm lease system includes a leasing unit (10) and a management and control unit (20). The leasing unit (10) includes a planting selection module (12), the planting selection module (12) can offer and allow selection of the type or types of the crop. The management and control unit (20) matches and controls growth of the crop according to the selected result of the planting selection module.

## Description

### TECHNICAL FIELD

The present disclosure relates to a lease system, in particular to a lease system for farms, Users can plant different types of crops according to their own needs.

### BACKGROUND

Crops are used to meet people's daily food needs and provide people with nutrients such as fiber and vitamins. With the development of agricultural technology, seasonal vegetables of different seasons can be purchased on the market all year round. But at present, the vegetables that people buy can only be tested by the relevant departments for their compliance, such as whether a heavy metal content in the vegetables and pesticide used to meet the people's consumption standards. In some market districts or small vegetable farms, there may not be a standardized monitoring system. Therefore, people must go to a regular shopping mall to buy when they need them, which undoubtedly increases the difficulty of purchase. However, in many cases, people buy vegetables randomly for convenience, even if not certified as healthy.

Ensuring the safety and freshness of vegetables for human consumption has always been a dilemma, the present disclosure provides a solution so that people can eat different kinds of vegetables safely.

### SUMMARY OF THE INVENTION

An advantage of the present disclosure is that it provides a farm leasing system and lease management method, wherein users select different types of crops through the farm lease system, and the lease system grows and manages the crops.

Another advantage of the present disclosure is that it provides a farm lease system and lease management method, wherein the user selects different planting areas and area sizes through the farm lease system to plant the selected crops.

Another advantage of the present disclosure is that it provides a farm lease system and lease management method, wherein after the user selects the type and quantity of the crops, the farm lease system can match and offer the matching planting area for the user to select.

Another advantage of the present disclosure is that it provides a farm lease system and lease management method, wherein the farm lease system can offer the types of crops that can be planted at the same time as the crops according to the crops selected by the user to improve the planting efficiency of the farm.

Another advantage of the present disclosure is that it provides a farm lease system and lease management method, wherein the user can monitor the growing status of the crops in real time.

Another advantage of the present disclosure is that it provides a farm lease system and lease management method, wherein the farm lease system can feed back information as to planting data of the crops to the user, so that the user can understand all the data as to the growth of the crops.

Another advantage of the present disclosure is that it provides a farm lease system and leasing management method, in which users can select managers to manage their selected farms according to their own needs.

Another advantage of the present disclosure is that it provides a farm lease system and leasing management method, in which users select different types of farming equipment to perform farming processes on the crops in different states of growth.

Another advantage of the present disclosure is that it provides a farm lease system and leasing management method, in which the user can control the types and quantities of chemicals applied to ensure that the crops are safe for consumption.

Another advantage of the present disclosure is that it provides a farm lease system and lease management method, wherein the farm lease system can remind the user to perform farming processes on the crops.

Another advantage of the present disclosure is that it provides a farm lease system and leasing management method, wherein the crops can be transported to users after they mature, and the users can eat the crops under their control.

Another advantage of the present disclosure is to provide a farm management system and a management method thereof, wherein the farm management system integrates the planting needs of multiple customers according to the type of cultivated land, and to plant types of crops according to the type of cultivated land, so as to improve the overall yield of the customer's crops.

Another advantage of the present disclosure is that it provides a farm lease system and leasing management method, wherein the farm lease system can rate the services of managers when subject to user selection.

Another advantage of the present disclosure is that it provides a farm lease system and leasing management method, in which users can sell the crops grown and controlled by themselves through the farm lease system.

Another advantage of the present disclosure is that it provides a farm lease system and leasing management method, in which different users can replace the crops grown and managed by themselves through the farming leasing system.

Another advantage of the present disclosure is that it provides a farm lease system and lease management method, wherein the user places an order and pays in the farm lease system to complete the lease process.

Other advantages and features of the present disclosure are fully embodied by the following detailed description and can be realized by the combination of means and devices specifically pointed out in the appended claims.

According to the present disclosure, the present disclosure capable of achieving the foregoing objectives and other objectives and advantages includes: a farm lease system for users to lease a farm area to grow a crop, wherein the farm lease system includes:

A leasing unit, the leasing unit includes a planting selection module, the planting selection module is used to select the type of the crop; and

A management and control unit, the management and control unit matches and controls the growth of the crops according to the selection of the planting selection module.

In a preferred embodiment, the planting selection module includes a crop selection module, and the user selects the type of the crops through the crop selection module.

In a preferred embodiment, the planting selection module includes a planting area selection module, and when the type of crop is selected, the user selects location and size of farm lease area through the planting area selection module.

In a preferred embodiment, the planting selection module includes a matching module, and the matching module offers farm area and area size suitable for the growth of the crop according to the selected type of the crop.

In a preferred embodiment, the planting selection module includes a recommendation module, and the recommendation module selects at least one of the types of the crops to be planted together with the crops according to the selected types of the crops.

In a preferred embodiment, the planting selection module includes a quantity selection module, the user selects the quantity of the crops to be planted or the area size of the farm area through the quantity selection module.

In a preferred embodiment, the management and control unit includes a personnel selection module, and the user can select a manager through the personnel selection module.

In a preferred embodiment, the management and control unit includes an equipment selection module for when the crops are in different growth stages, and the user selects different types of the equipment to engage in farming activities through the equipment selection module.

In a preferred embodiment, the management and control unit includes a dosage control module, the user controls the quantity of any spray solution applied to the crop through the dosage control module.

In a preferred embodiment, the management and control unit includes a feedback module, the feedback module enables two-way communication between the user and the farm lease system.

In a preferred embodiment, the feedback module includes a reminding module, so the reminding module can feed back the growth state data of the crop to the user.

In a preferred embodiment, the feedback module includes a monitoring module, and the user monitors the growth state of the crops through the monitoring module.

In a preferred embodiment, the feedback module includes a notification module, the notification module can notify the user to harvest the crops after the crops become mature and selected.

In a preferred embodiment, the farm lease system includes a processing unit, the processing unit includes a transportation module, and the transportation module transports the crops to the user according to user information.

In a preferred embodiment, the processing unit includes an exchange module, and the crops of different users can be exchanged in the exchange module.

In a preferred embodiment, the processing unit includes a sales module, the user can sell the crops using the sales module.

According to another aspect of the present disclosure, the present disclosure further provides a lease management method, wherein the lease management method includes the following steps:
(a) choosing at least one type of crop; and
(b) controlling the growth process.

In a preferred embodiment, after the step (b), a method includes (c) processing the crops after harvest or termination of growth.

In a preferred embodiment, the step (a) further includes: (a.1) selecting a planting area, a user selects the planting area according to type and desired quantity of the selected crops, the environment and area of the planting area being conducive to the planting of the selected crops.

In a preferred embodiment, the step (a) further includes: (a.2) offering the planting area, and calculating planting environment and planting space of the crops and offering a planting area to the user after the user completes the selection of the type and quantity of the crops, and the user can directly select the planting area.

In a preferred embodiment, the step (a) further includes (a.3) recommending the types of the crops that are suitable to be planted at the same time, offering one or more types of the crops that can be planted with the selected crops at the same time after the user selects the type of the crops, for users to decide.

In a preferred embodiment, the step (a) further includes (a.4) selecting the quantity of crops to be planted, and then calculating the location and area of the farm that the user needs to rent.

In a preferred embodiment, the step (a) further includes (a.5) paying the cost required for leasing a farm, when the type and quantity of the crops and the area of the farm are selected, payment by a user is required.

In a preferred embodiment, the step (b) further includes (b.1) selecting a manager, and the user can select a manager to manage and control the farm rented by him.

In a preferred embodiment, the step (b) further includes (b.2) selecting at least one equipment to be used for agricultural work on the crops, and the crops can be processed at different growth stages to perform different agricultural operations. For work, users can choose different types of equipment for different time periods.

In a preferred embodiment, the step (b) further includes (b.3) controlling the amount of spraying solution applied to the crops. The crops in different growth cycles, and the crops need to be sprayed with solution processes such as disinfestation and irrigation. Users can control the amount of the spraying solution according to their own needs, thereby ensuring the safety of the crops and reducing the amount of chemical residues in the crops.

In a preferred embodiment, the step (b) further includes (b.41) feeding back information as to the growth status of the crop at different stages to the user, so that the user can understand the growth of the crop.

In a preferred embodiment, the step (b) further includes (b.42) the user is able to monitor the growth status of the crops in real time, such as a process of insect removal.

In a preferred embodiment, the step (c) further includes (c.1) transporting the crops to the user, and transporting the picked crops to the user according to the address and contact information reserved by the user.

In a preferred embodiment, the step (c) further includes (c.2) users can barter and exchange different types of the crops, as an exchange platform, different users can plant the crops themselves. The exchange of value can satisfy the diversification of the types of crops owned by users.

In a preferred embodiment, the step (c) further includes (c.3) the user sells the harvested crops on a trading platform, the user sells the crops grown by himself to increase his income of the farm.

In a preferred embodiment, the step (a.5) further includes (a.51) payment via online or cash, and the type of payment method is not limited.

In a preferred embodiment, the step (a.5) further includes (a.52) deducting the same amount of money from the crops after harvest.

### BRIEF DESCRIPTION OF THE DRAWINGS

FIG. 1 is an overall schematic diagram of a login interface according to a preferred embodiment of the present disclosure.
FIG. 2A is a schematic diagram of a process of selecting and placing an order according to a preferred embodiment of the present disclosure.
FIG. 2B is a schematic diagram of a payment process according to a preferred embodiment of the present disclosure.
FIG. 3A is a schematic diagram of a crop management operation interface according to a preferred embodiment of the present disclosure.
FIG. 3B is a schematic diagram of a crop management process according to a preferred embodiment of the present disclosure.
FIG. 4A is a schematic diagram of an operation interface of a crop processing process according to a preferred embodiment of the present disclosure.
FIG. 4B is a schematic diagram of a crop processing process according to a preferred embodiment of the present disclosure.
FIG. 5 is a flowchart of crop selection method according to a preferred embodiment of the present disclosure.
FIG. 6 is a flow chart of crop management method according to a preferred embodiment of the present disclosure.
FIG. 7 is a flowchart of another method of selecting crops according to a preferred embodiment of the present disclosure.
FIG. 8 is a block diagram of a farm lease system according to a preferred embodiment of the present disclosure.

### DETAILED DESCRIPTION

The following description is used to disclose the present disclosure so that those skilled in the art can implement the present disclosure. The preferred embodiments in the following description are only examples, and those skilled in the art can think of other obvious variations. The basic principles of the present disclosure defined in the following description can be applied to other embodiments, modifications, improvements, equivalents, and other technical solutions that do not depart from the spirit and scope of the present disclosure.

Those skilled in the art should understand that, in the disclosure of the present disclosure, the terms "longitudinal", "lateral", "upper", "lower", "front", "rear", "left", "right", the orientation or positional relationship indicated by "vertical", "horizontal", "top", "bottom", "inner", "outer", etc. are based on the orientation or positional relationship shown in the drawings, which is only for the convenience of describing the present disclosure, rather than indicating or implying that the device or element referred to must have a specific orientation, or be constructed and operated in a specific orientation, and therefore the above terms should not be understood as limiting the present disclosure.

It can be understood that the term "a" should be understood as "at least one" or "one or more", that is, in one embodiment, the number of an element may be one, while in other embodiments the number can be more than one, and the term "one" cannot be understood as a restriction on the number.

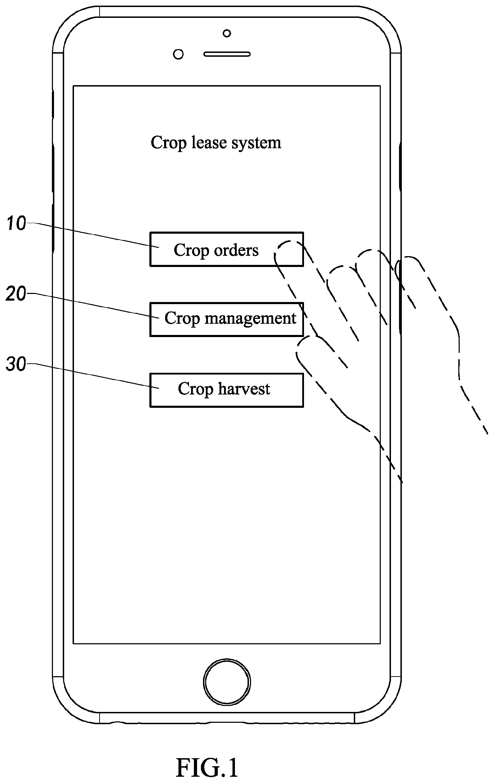

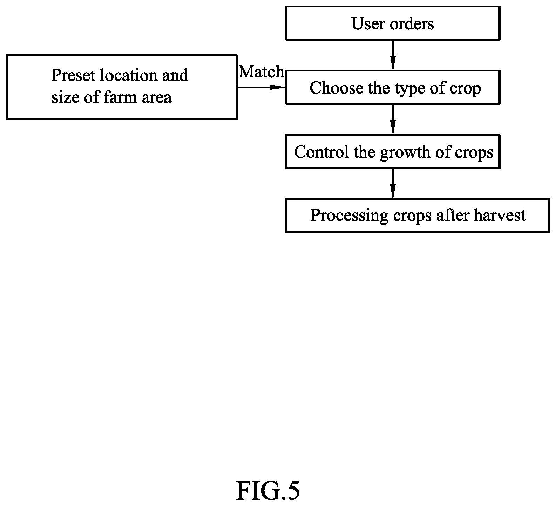

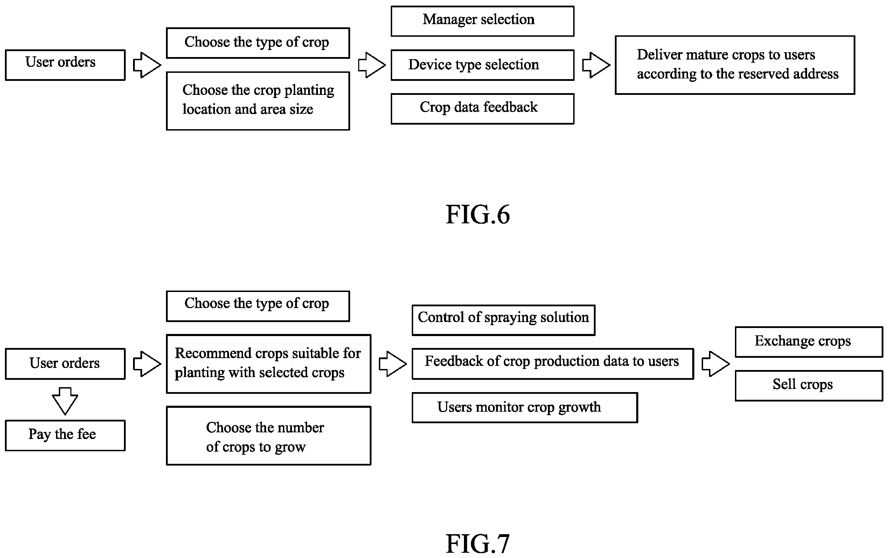

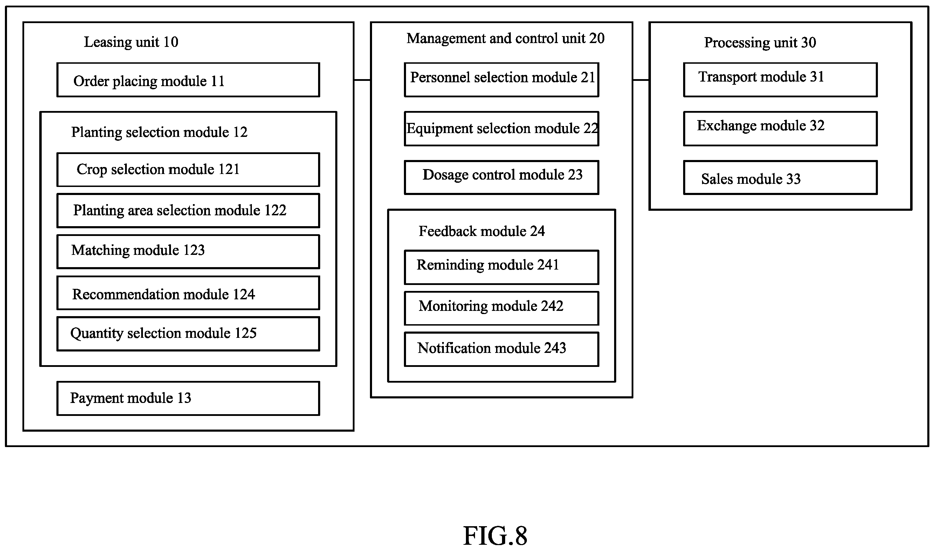

In a farm lease system as shown in FIG. 1 to FIG. 8, user can rent a farm in the farm lease system, and at the same time select a crop to be planted on the farm, the farm lease system enables planting and management of the crops according to the user's choice, and the farm lease system provides edible crops safe for human consumption.

Furthermore, the farm lease system includes a leasing unit 10 and a management and control unit 20. The user can select different types of crops in the leasing unit 10 according to their different preferences and needs. The management and control unit 20 can plant and control the crops selected by the user, and the user can monitor the growth of the crops in real time to ensure the food safety of the crops.

Furthermore, the leasing unit 10 includes an order placing module 11 and a planting selection module 12. The user implements the order placing operation on the network platform through the order placing module 11, and the planting selection module 12 can provide the user with different kinds of the crops and the farm area. After the user selects the crop type and places an order, the planting selection module 12 can control the planting of the crop in the corresponding planting area.

In one embodiment, the planting selection module 12 includes a crop selection module 121 and a matching module 123. After the user selects the crops to be planted through the crop selection module 12, the matching module 12 can offer a planting area suitable for the crops to the user, and then the user selects the size of the planting area according to the quantity of crops to be planted. It is worth mentioning that due to the different growth environment of each of the crops, some liking light, some liking a dark environment, some liking a dry environment, and some liking a moist environment, users may generally only know the types of the crops, and are not clear about the planting conditions of the crops. Therefore, the matching module 123 helps the user to select the planting area. After the user selects the type of the crop, the matching module 123 offers an area suitable for the crop to the user for selection. The matching module 123 performs calculations according to the planting quantity of the crops, to provide the area of the farm area that the user needs to rent.

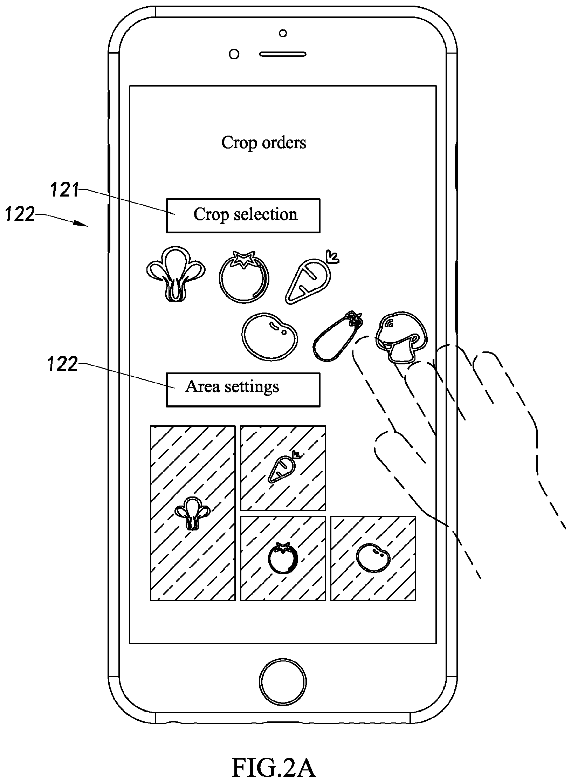

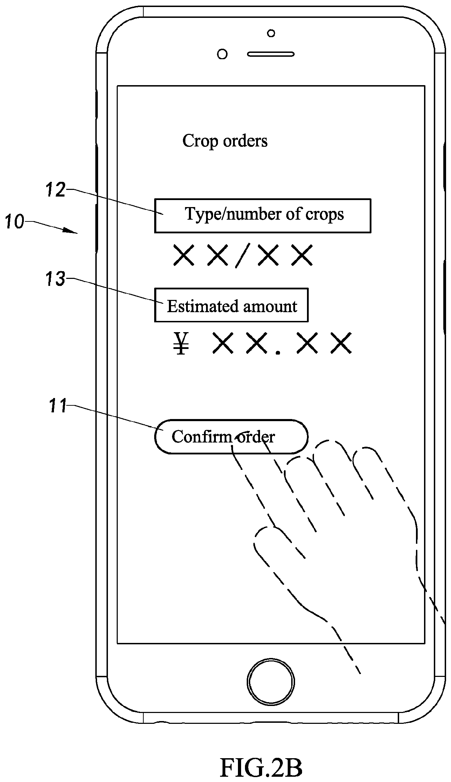

In another embodiment as shown in FIG. 2A, the planting selection module 12 includes a planting area selection module 122. After the user selects the crop to be planted through the crop selection module 121, the user then selects the planting area through the planting area selection module 122. This embodiment is compared with the previous embodiment, in this embodiment, the user can choose his own planting area. For example, in an area of open plain, when the planting environment of each planting area is substantially constant, the user can select according to the vacant display area of the planting area selection module 122. Preferably, the planting area selection module 122 can select the type and quantity of the crops according to the crop selection module 121, to mark an area suitable for the user to plant, such as applying text or color for the user to distinguish and choose. In other words, the planting area selection module 122 can calculate the planting area required by the user to plant the crops, so that no planting space is wasted, so that the farm can achieve the maximum planting space.

It is worth mentioning that the planting selection module 12 further includes a recommendation module 124, the recommendation module 124 can offer or suggest the crops that can be planted simultaneously with the selected crops according to the crops selected by the user. In other words, some of the crops have symbiotic growth conditions, for example, some crops have relatively high rate of growth, and crops that grow in a dark environment can be planted in the interval between such crops, thereby increasing the utilization rate of the planting area, and users can gather more harvests. The recommendation module 124 can offer one or more crops for user selection.

It is worth mentioning that the planting selection module 12 further includes a quantity selection module 125, the user selects the quantity of the crops to be planted through the quantity selection module 125. The matching module 123 and the planting area selection module 122 can calculate the size of the planting area required for planting the crops according to the data input by the user of the quantity selection module 125. Those skilled in the art can understand that the manner in which the quantity selection module 125 calculates the quantity of the crops is not a limitation of the content of the present disclosure, and can be calculated by calculating the number or weight of the crops.

When the type of crop and the planting area are selected, the management and control unit 20 can control the planting process and growth process of the crop, and the user can monitor the growth status of the crop in real time, so that the user can be confident of eating a crop which is safe to eat.

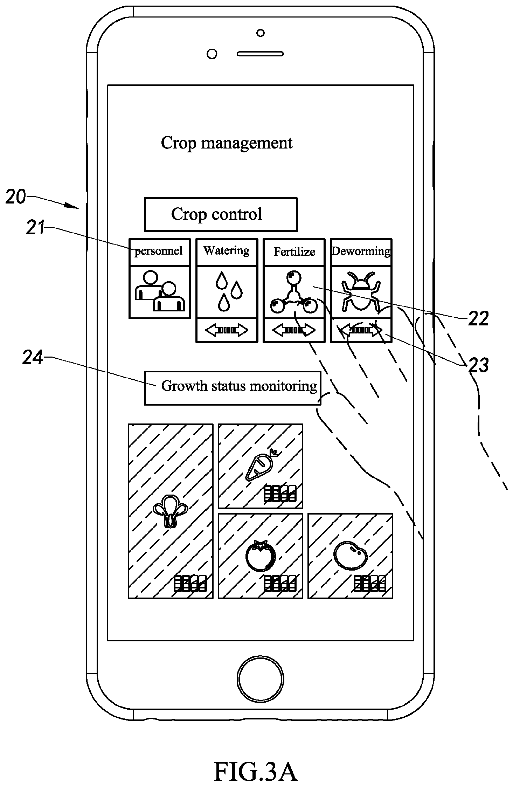

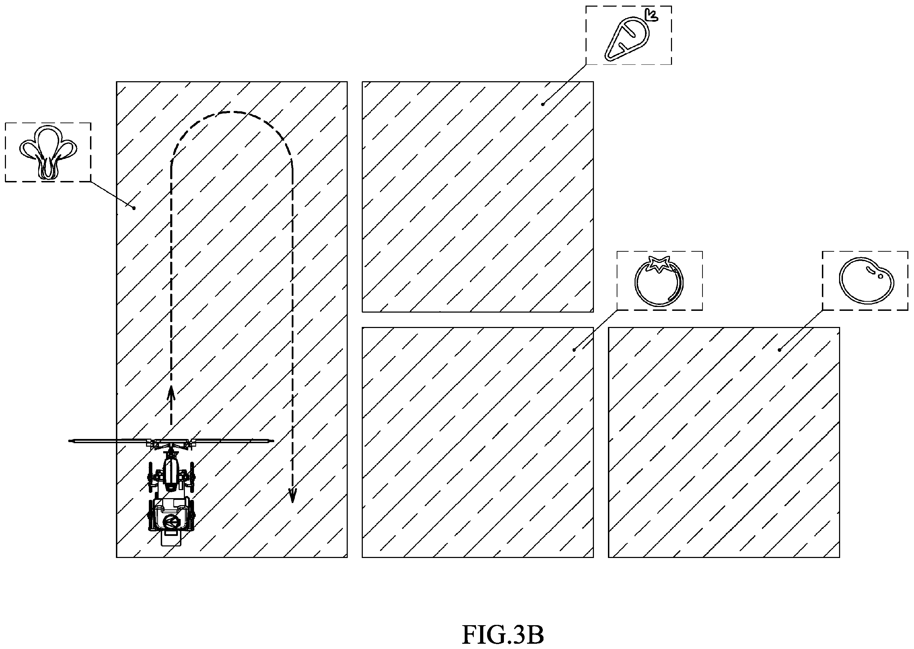

As shown in FIG. 3A, the management and control unit 20 includes a personnel selection module 21, the user specifies the staff who manages the crops through the personnel selection module 21, and the crops selected by the user are managed and maintained in a targeted manner by designated staff to facilitate the growth of the crops. Preferably, the personnel selection module 21 has a rating function, so that the user can evaluate the work performance of the staff, and then the personnel selection module 21 can be ranked according to the scores of the evaluations, and the user can give priority to or pay for the selection of best-performing service staff for the management and control of the crops.

It is worth mentioning that the management and control unit 20 further includes an equipment selection module 22. The user monitors the growth of the crops through the management and control unit 20, and performs maintenance for the different growth requirements of the crops, the user can perform the matching farming process through the equipment selection module 22, such as the steps of loosening the soil, fertilizing, and watering. When the user selects the corresponding agricultural equipment through the equipment selection module 22, the farm lease system can notify the staff to use the equipment to perform targeted work on the crops. Those skilled in the art can understand that the type of such device or devices is not a limitation of the content of the present disclosure.

It is worth mentioning that the management and control unit 20 further includes a dosage control module 23, the user uses the dosage control module 23 to control an amount of solution when performing different farming processes on the crops, such as applying fertilizer, spraying pesticide, or applying irrigation. The amount of pesticide residues on the crops is an important factor affecting the consumption of the crops, so the dosage control module 23 can control the amount of the solution when spraying the crops. Because the management and control unit 20 can monitor the growth status of the crops in real time, the dosage control module 23 uses the data from monitoring to calculate the dosage required for the spraying process, so as to ensure growth of the crops but keep the dosage within certain limits. To harvest the crops that are safer, the user can set the amount required for spraying through the dosage control module 23, or not set the spraying dosage through the dosage control module 23, the crops can be eaten more safely.

It is worth mentioning that the management and control unit 20 further includes a feedback module 24, which functions as a bidirectional transmission of management and control information between the user and the crop. The management and control unit 20 feeds back data as to the monitoring of the crop growth to the user, so that the user can understand the growth state of the crop, and remind the user to perform different operations in different growth states of the crop; the user can monitor and view the planting status of the crops in real time through the feedback module 24, and the user can ensure that the management and control of the crops are carried out in accordance with the user's own needs.

Further, the feedback module 24 includes a reminding module 241. When the management and control unit 20 monitors the growth process of the crops at different stages, the reminding module 241 reminds the user as to certain required steps. For example, when the crops need to be weeded, disinfested, and irrigated, the reminding module 241 reminds the user to perform corresponding operations. This method enhances the user's sense of experience, and allows the user to understand the entire process of the growth of the crop, and to understand the safety of the crop. The user not only experiences the selection of the crops and harvests the crops. Introduction to dosage control.

Further, the feedback module 24 includes a monitoring module 242, the monitoring module 242 can monitor all the states of each growth stage of the crops, such as the process of planting, deworming, and irrigation of the crops, and the monitoring module 242 can feed back the various monitoring data to the user, so that the user can understand the growth of the crop.

Further, the feedback module 24 includes a notification module 243. The crops mature from seedlings after a certain period of control. The notification module 243 is used to notify the user that the crops are mature, and the user can pick and harvest. Preferably, the notification module 243 can inform the user of the optimal maturity period of the crop, and the user can eat the ripest crop.

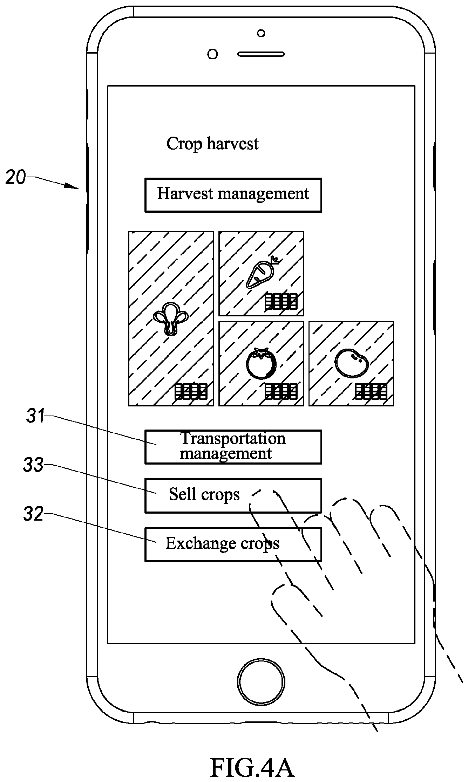

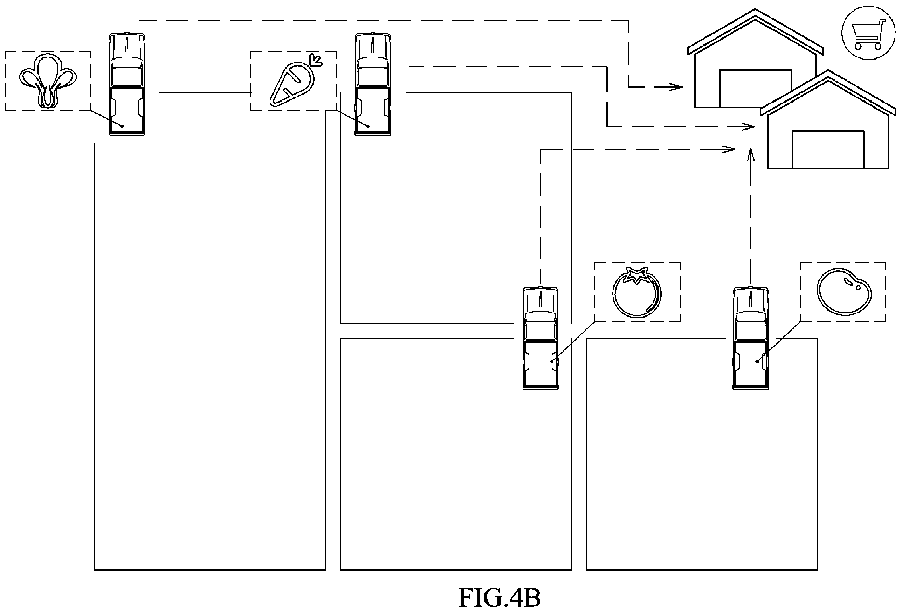

As shown in FIG. 4A and FIG. 4B, the farm lease system can transport the crops to the user according to the user's reserved address and contact information after the picking of the crops. Or when the crop is picked, the notification module 243 notifies the user, the user feeds back the address and contact information to the farm lease system, so that the user can receive delivery of the crop.

The farm lease system further includes a processing unit 30, the processing unit 30 processes the harvested crops by the user. The processing unit 30 includes a transport module 31, the transport module 31 can transport the crops to the user according to the information provided by the user, so as to facilitate the user's consumption.

In another embodiment, the processing unit 30 includes an exchange module 32, and multiple users can exchange the harvested crops on the platform of the exchange module 32. The user needs diversity in eating crops, some users change their minds or replace redundant crops after planting and selecting the crops. Therefore, the exchange module 32 can provide an exchange platform, and the user can exchange different quantities and types of the crops with each other, so that there can be many crops available to the user.

In another embodiment, the processing unit 30 includes a sales module 33, and the user directly sells the surplus or unnecessary crops on the platform of the sales module 33. The amount of the crops harvested cannot be determined in advance, once the user has harvested a large amount of the crops, it is much larger than when the user needs to meet, or the user directly sells the harvested crops to realize the maximum value of the user. Preferably, the sales module 33 can be independently used as a software sales platform, or the sales module 33 is compatible with the current mainstream e-commerce platform, for example, e-commerce platforms such as Taobao, JD, or Amazon. Therefore, the farm lease system not only meets the user's own food needs, but also serves as an industrial chain to sell the crops with high-safety food.

It is worth mentioning that the user can use the farm lease system in a free or paid manner, and the user can pay a certain amount for the user to rent the farm, the seeds of the crop or the management personnel. The leasing unit 10 includes a payment module 13, when the user selects the crop, the planting area, or the manager, the payment module 13 can display the total cost, when the user completes the payment of the required cost, the farm lease system is able to do follow-up work to plant and cultivate the crops. Those skilled in the art can understand that the payment method of the payment module 13 is not a limitation of the content of the present disclosure, and users can use different payment methods to make payments.

In another embodiment, the user payment method can be by a mortgage on the crops. In other words, the user can use the amount obtained after the sale of the crops or directly mortgage the crops with an equivalent value to pay the cost of renting the farming.

According to the lease management method for crops of the present disclosure, the user can place an order from the lease management method to select the type of the crops to be planted, and the lease management method can perform planting management of the crops. The lease management method includes the following steps:
(a) choose at least one type of crop; and
(b) control the growth process of the farming.

It is worth mentioning that after the step (b), the step (c) is used to process the crops after harvest.

It is worth mentioning that the step (a) further includes (a.1) selecting a planting area, the user selects the planting area according to the type and quantity of the selected crops, and the environment and area of the planting area are Facilitate the planting of the selected crops.

It is worth mentioning that the step (a) further includes (a.2) pushing the planting area, when the user completes the selection of the types and quantity of the crops, calculating the planting environment and planting space of the crops and push the planting area to the user, so that the user can directly select it.

It is worth mentioning that the step (a) further includes (a.3) recommending the types of the crops suitable for the simultaneous planting of the selected crops. When the user selects the type of the crop, push one or more types of the crop that can be planted with the selected crop at the same time for the user to choose, which can improve the utilization of the leased farm area rate.

It is worth mentioning that the step (a) further includes (a.4) selecting the number of the crops. After the user selects the type of the crops, the number of crops to be planted is further selected, and then the user is calculated the location and size of the farm to be leased.

It is worth mentioning that the step (a) further includes (a.5) paying for the cost of leasing the farm. When the type and quantity of the crops and the area of the farm are selected, the user needs to make a payment.

It is worth mentioning that the step (b) further includes (b.1) selecting a manager, and the user can select a manager to manage and control the farm rented by him.

It is worth mentioning that the step (b) further includes (b.2) selecting at least one equipment for agricultural work on the crops, and the crops can be processed at different growth stages to perform different agricultural work, and the user can select different types of the equipment according to different time periods.

It is worth mentioning that the step (b) further includes (b.3) controlling the amount of spraying solution for the crops, the crops are in different growth cycles, and the crops need to be sprayed with solution processes such as disinfestation and irrigation, users can control the dosage of the spraying solution according to their own needs, thereby ensuring the safety of the crops and reducing the amount of drug residues in the crops.

It is worth mentioning that the step (b) further includes (b.41) feeding back the growth status of the crop at different stages to the user, so that the user can understand the growth of the crop.

It is worth mentioning that the step (b) further includes (b.42) the user is able to monitor the growth status of the crops in real time, such as the insect removal process of the crops.

It is worth mentioning that the step (c) further includes (c.1) transporting the crops to the user, and transporting the picked crops to the user according to the address and contact information reserved by the user for the user's edible.

It is worth mentioning that the step (c) further includes (c.2) users can exchange different types of the crops. As an exchange platform, different users exchange the crops they planted with equal value to satisfy the diversification of the types of crops owned by users.

It is worth mentioning that the step (c) further includes (c.3) the user sells the harvested crops, as a trading platform, the user sells the crops grown by himself, so as to increase the income of renting the farm.

It is worth mentioning that the step (a.5) further includes (a.51) payment via online or cash, and the type of payment method is not limited.

It is worth mentioning that the step (a.5) further includes (a.52) deducting the same amount of money from the crops after harvest.

Those skilled in the art will understand that the embodiments of the present disclosure shown in the accompanying drawings and described above are only examples of the present disclosure, rather than limiting.

Therefore, it can be seen that the object of the present disclosure can be fully and effectively accomplished. This embodiment for explaining the function and structure principle of the present disclosure has been fully illustrated and described, and the present disclosure is not limited by changes based on the principle of these embodiments. Therefore, the present disclosure includes all modifications within the scope and spirit of the appended claims.

## Claims

1. A farm lease system, used by a user to lease a farm area to grow a crop, is **characterized by** comprising:
a leasing unit comprising a planting selection module, wherein the planting selection module is used to select type of the crop; and
a management and control unit matching and controlling growth of the crop according to the selected result of the planting selection module.

2. The farm lease system according to claim 1, wherein the planting selection module comprises a crop selection module, and the user selects the type of the crops through the crop selection module.

3. The farm lease system according to claim 2, wherein the planting selection module comprises a planting area selection module, and when the type of crops is selected, the user selects location and size of the farm area through the planting area selection module.

4. The farm lease system according to claim 2, wherein the planting selection module comprises a matching module, and the matching module pushes the farm area and area size suitable for the growth of the crop according to the selected type of the crops.

5. The farm lease system according to claim 3, wherein the planting selection module comprises a recommendation module, and the recommendation module selects at least one of the types of the crops to be planted together with the crops according to the selected types of the crops.

6. The farm lease system according to claim 4, wherein the planting selection module comprises a recommendation module, and the recommendation module selects at least one of the types of the crops to be planted together with the crops according to the selected types of the crops.

7. A lease management method, **characterized in that** the lease management method comprises the following steps:
(a) choosing at least one type of crops; and
(b) controlling growth process.

8. The lease management method according to claim 7, wherein the step (b) further comprising:
(c)processing the crops after harvest or termination.

9. The lease management method according to claim 8, wherein the step (a) further comprising: (a.1) selecting a planting area, wherein user selects the planting area according to type and quantity of the selected crops, environment and area of the planting area are conducive to the planting of the selected crops.

10. The lease management method according to claim 8, wherein the step (a) further comprising: (a.2) pushing the planting area, and calculating planting environment and planting space of the crops and pushing the planting area to the user after the user completes the selection of the type and quantity of the crops, and the user directly select.

11. The lease management method according to claim 8, wherein the step (a) further comprising: (a.3) recommending the types of the crops that are suitable for the selected crops to be planted at the same time, pushing one or more types of the crops that is planted with the selected crops at the same time after the user selects the type of the crops, for users to choose.
